(19) Europäisches Patentamt
European Patent Office
Office européen des brevets

(11) Veröffentlichungsnummer: **0 154 248**
**B1**

# (12) EUROPÄISCHE PATENTSCHRIFT

(45) Veröffentlichungstag der Patentschrift: **18.10.89**

(51) Int. Cl.⁴: **B 01 D 13/04**, B 01 D 53/22, C 01 B 13/02, C 10 G 31/11 // C08J5/22

(21) Anmeldenummer: **85101811.9**

(22) Anmeldetag: **20.02.85**

## (54) Membrane aus organischen Polymeren, die kristalline Trägerverbindungen enthalten, deren Herstellung und Verwendung.

(30) Priorität: **28.02.84 DE 3407149**

(43) Veröffentlichungstag der Anmeldung:
**11.09.85 Patentblatt 85/37**

(45) Bekanntmachung des Hinweises auf die Patenterteilung:
**18.10.89 Patentblatt 89/42**

(84) Benannte Vertragsstaaten:
**AT BE CH DE FR GB IT LI NL**

(56) Entgegenhaltungen:
**EP-A- 0 098 731**
**FR-A- 2 079 460**

**MAKROMOLEKULARE CHEMIE, RAPID COMMUNICATION, Band 1, 1980, Seiten 753-758, Basel, CH; H. BOHLEN et al.: "Polymeric schiff base chelates and their precursors, 2 polymeric Co(salen)s from 2-hydroxy-5-vinylbenzaldehyde and 4,4-divinylsalen"**
**CHEMICAL ABSTRACTS, Band 96, Nr. 18, 3. Mai 1982, Seite 154, Zusammenfassung Nr. 145350f, Columbus, Ohio, US; D.A. NELSON: "Separation of gas mixtures by selective extraction", & GOV. REP. ANNOUNCE. INDEX (U.S.)1982, 82(1), 67**

(73) Patentinhaber: **BASF Aktiengesellschaft, Carl-Bosch-Strasse 38, D-6700 Ludwigshafen (DE)**

(72) Erfinder: **Sterzel, Hans-Josef, Dr., Wasgauring 3, D-6701 Dannstadt-Schauernheim (DE)**
Erfinder: **Sanner, Axel. Dr., Lorscher Ring 2 c, D-6710 Frankenthal (DE)**

EP 0 154 248 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Aus Energy Technology (Proc. Energy Technology Conference, Washington), Bd. 9 (1982), S. 505 bis 509, sind Membranen zum Beispiel aus Silikon-Kautschuk, Polystyrol oder Polyethylmethacrylat bekannt, die eine erhöhte Sauerstoffdurchlässigkeit haben. Es wird dort auch beschrieben, daß der Trennfaktor für Sauerstoff durch Inkorporieren von Sauerstoffüberträgern verbessert wird. Geeignete Membranen sollen beispielsweise Flüssigmembrane sein, die auf eine mikroporöse Polymermembran aufgetragen sind und einen Sauerstoffüberträger gelöst enthalten. Ein Nachteil solcher Membranen ist die kurze Lebensdauer von nur wenigen Monaten und die nicht ausreichende Permeabilität für Sauerstoff. Aus Makromolekulare Chemie, Rapid Comm., Band 1 (1980), Seiten 753 bis 758 sind auch schon Vinylpolymere bekannt, die Co(salen)gruppen an die Polymerkette gebunden enthalten. Es wird lediglich erwähnt, daß solche Polymere in der Lage sind, Sauerstoff zu binden.

Es bestand deshalb die technische Aufgabe, selektive Membranen mit erhöhten Permeabilitäten zu entwickeln, die sich durch einen guten Trennfaktor und eine hohe Lebensdauer auszeichnen.

Diese Aufgabe wird gelöst durch Membranen aus organischen Polymeren, die kristalline zum selektiven Transport von niedermolekularen Substanzen befähigte Trägerverbindungen enthalten, wobei als Trägerverbindungen die in Anspruch 1 genannten Verbindungen eingesetzt werden. Ferner ist ein Gegenstand der Erfindung ein Verfahren zur Herstellung von Membranen, wobei man eine das Polymere und die zum selektiven Transport von niedermolekularen Substanzen befähigte Trägerverbindung enthaltende Lösung auf eine mikroporöse Trägermembran aufträgt und das Lösungsmittel verdampft unter Ausbildung einer Membran aus dem Polymeren, das die zum selektiven Transport von niedermolekularen Verbindungen befähigte Trägersubstanz in kristalliner Form enthält.

Schließlich ist ein Gegenstand der Erfindung die Verwendung solcher Membranen zur Abtrennung von molekularem Sauerstoff und zur Trennung von Kohlenwasserstoffe in geradkettige und verzweigte Isomere.

Die neuen Membranen zeichnen sich durch gute Permeabilität und einen hohen Trennfaktor aus. Ferner haben die neuen Membranen eine erhöhte Lebensdauer, die sie zur Anwendung in der Technik geeignet machen.

Die neuen Membranen sind aufgebaut aus Polymeren. Geeignete Polymere sind beispielsweise: hydrierte Styrol-Butadien-Blockcopolymere, Copolymere aus Styrol und Maleinsäure oder Ethylen und Acrylsäure, ferner Polyethersulfone oder Polysulfone. Besonders bewährt haben sich Polyethersulfone, Polysulfone sowie hydrierte Styrol-Butadien-Blockcopolymere.

Die Membranen aus Polymeren enthalten kristalline, zum selektiven Transport von niedermolekularen Substanzen befähigte Trägerverbindungen. Solche Trägerverbindungen sind in der Lage, niedermolekulare Substanzen, wie molekularen Sauerstoff, aufzunehmen und reversibel wieder abzugeben. Die erste Gruppe von Trägerverbindungen sind sogenannte Co(salen)-Verbindungen der Formel I

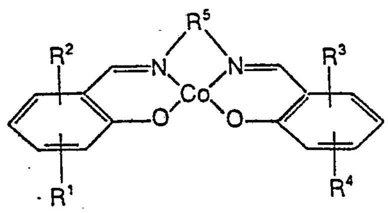

(I)

in der $R^1$, $R^2$, $R^3$ und $R^4$ jeweils ein Wasserstoffatom, eine Methylgruppe, eine Methoxygruppe, ein Fluoratom oder eine Trifluormethylgruppe bezeichnen und $R^5$ den Rest $-CH_2CH_2-$ oder den Rest

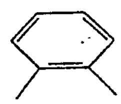

bedeutet, besonders bevorzugt sind Co(salen)-Verbindungen, in denen die Substituenten $R^1$, $R^2$, $R^3$ und $R^4$ jeweils ein Wasserstoffatom bezeichnen und $R^5$ für die Gruppe $-CH_2CH_2-$ steht.

Andere geeignete Trägerverbindungen sind Zeolithe, die man in einer Lösung des organischen Polymeren aus den Ausgangsstoffen erzeugt, und die als Molekularsiebe Verwendung finden, insbesondere Y-Zeolith.

Die Membranen haben in der Regel eine Dicke von 5 bis 100 µm und enthalten vorteilhaft 2 bis 70 Vol.%, insbesondere 5 bis 20 Vol.% der kristallinen zum selektiven Transport von niedermolekularen Substanzen befähigten oben genannten Trägerverbindungen. Vorteilhaft ist die Kristallgröße der Trägerverbindungen so bemessen, daß sich durch die Membran hindurch transportfähige Stege bilden, d.h. daß die Kristalle eine Länge von 5 bis 100 µm aufweisen. Die erfindungsgemäßen Membranen sind vorteilhaft auf mikroporösen Membranen, die als Mikrofiltrationsmembrane bekannt sind, z.B. aus Polyethylen, Polypropylen oder Polytetrafluorethylen aufgebracht. Diese Trägermembranen können flächig als Plattenmodulen oder Spiralmodulen sowie als Hohlfasern und Hohlfasermodulen ausgebildet sein.

Vorteilhaft stellt man die erfindungsgemäßen Membranen her, indem man das entsprechende Polymere und die Trägerverbindung in einem gemeinsamen Lösungsmittel auflöst. Diese Lösung wird dann auf eine mikroporöse Trägermembran, z.B. aus Polyethylen, Polypropylen oder Polytetrafluorethylen aufgebracht und das Lösungsmittel verdampft. Die Verdampfung des Lösungsmittels erfolgt vorteilhaft langsam und gleichmäßig,

wobei sich eine Polymermembran ausbildet, in der die Trägersubstanz in kristalliner Form vorliegt.

Die Zeolithe, die als Trägerverbindung eingesetzt werden, werden in einer Lösung der Polymeren aus den Ausgangsstoffen hergestellt. Lösungsmittel für die anzuwendenden Polymeren sind beispielsweise Alkohole, Ether und Amine. Als Lösungsmittel kann man allgemein ein-, zwei- oder mehrwertige, primäre, sekundäre oder tertiäre Alkohole, z.B. $CH_3OH$, $CH_3CH_2OH$, $(CH_3)_2CH{-}OH$, Butandiol, Hexandiol einsetzen.

Als etherische Lösungsmittel kann man sowohl lineare als auch cyclische Ether mit einer $(-CH_2CH_2-O)$-Gruppierung wie Mono-, Di-, Tri- und Tetraethylenglykoldimethylether (Glyme), Diethylether, Tetrahydrofuran, Dioxan oder Gemische davon.

Als Amine kommen zum Einsatz primäre oder sekundäre Amine wie Dipropylentriamin, Dihexamethylentriamin, Hexamethylendiamin, Propylendiamin, Diethylentriamin, Triethylentriamin oder Mischungen dieser Amine.

Aber auch andere polare Lösungsmittel wie Ketone, insbesondere Aceton und Methylethylketon, Säureamide wie Dimethylformamid, Dimethylacetamid, Formamid, Acetamid oder N-Methylpyrrolidon sowie schwefelhaltige Lösungsmittel wie Dimethylsulfoxid, Sulfolan oder Diphenylsulfen sind geeignete Lösungsmittel.

Unter den üblichen Bedingungen für die Synthese von Zeolithen werden diese bei einer Temperatur von 110 bis 170 °C über die Dauer von mehreren Stunden bis zu mehreren Tagen unter dem Eigendruck des Lösungsmittels kristallisiert. Vor dem vollständigen Abschluß der Kristallisation wird die Lösung vorteilhaft auf einen Träger wie vorgenannt aufgetragen und das Lösungsmittel verdampft. Während der Verdampfung des Lösungsmittels wird die Kristallisation vervollständigt. In Anlehnung an die sogenannte Sol-Gel-Technik zur Herstellung von Gläsern und Keramiken werden die Zeolithe aus Ausgangsstoffen in der Lösung direkt hergestellt, z.B. aus Alkoxiden vom Typ $Si(OR)_4Al(OR)_3$ oder $Zr(OR)_4Ti(OR)_4$ oder NaOR, wobei R jeweils einen Alkanrest von $C_nH_{2n+1}$ mit n = 1 bis 10 bezeichnet. Die Ausgangsstoffe werden hierbei in den gewünschten Molverhältnissen in der Lösung eines alkalischstabilen Polymeren gemischt und durch Wasserzutritt der entsprechende Zeolith erzeugt.

Membranen, die Trägerverbindungen der Formel I enthalten, eignen sich zur Abtrennung von molekularem Sauerstoff aus solchen enthaltenden Gasen, während Membranen die Zeolithe als Trägerstoffe enthalten, zur Trennung von geradkettigen Isomeren, von verzweigten Isomeren aus Kohlenwasserstoffen geeignet sind. Besonders eignen sich solche Membranen für die Trennung von $C_6$-Kohlenwasserstoff, insbesondere von Kohlenwasserstoffen mit 3 bis 6 Kohlenstoffatomen.

Die Zeolithe enthaltenden Membranen können auch als Ionenaustauschermembrane verwendet werden. Ionenaustauschermembrane, die aus organischen Polymeren, vor allem hydrierten Styrol/Butadien-Blockcopolymeren und darin suspendierten Ionen leitenden anorganischen Füllern bestehen, werden bereits für die Anwendung als Separatoren für alkalische Hochleistungsbatterien entwickelt. Der Volumenanteil des Füllstoffs beträgt hierbei 40 bis 45%, um über die sich berührenden Teilchen die notwendige Leitfähigkeit zu erzielen. Im Fall der erfindungsgemäßen Membranen bilden sich wegen der Richtungsorientierung der Kristallisation Leitfähigkeitskanäle bei wesentlich niedrigeren Volumenanteilen aus.

Der Gegenstand der Erfindung sei an folgendem Beispiel veranschaulicht.

Beispiel

0,6 g des Kobalt-Chelat-Komplexes des Salicylaldehyd-Ethylendiamin-Kobalt$^{2+}$, bekannt auch unter dem Namen Co(salen) und 1,0 g Polysulfon (Udel 1700 P der Fa. U.C.C.) wurden gemeinsam in 50 ml Pyridin unter Sauerstoffausfluß gelöst. Mit dieser Lösung wurde eine mikroporöse Polytetrafluorethylen-Membran getränkt. Nach Ablaufen der überschüssigen Lösung wurde die Membran langsam unter Stickstoff getrocknet, wobei Co(salen) auskristallisierte.

Zur Aktivierung des Trägerstoffes wurde die Membran 2 h bei 100 °C und 0,1 mbar Druck gehalten. Nach Einlassen von Luft in das Trockengefäß wechselte die Farbe der Membran von braun nach schwarz. Aus der Gewichtszunahme im Vergleich zur unbehandelten Trägermembran ergab sich, daß 100 $cm^2$ Trägerfläche etwa mit 160 mg der erfindungsgemäßen Membran belegt waren. Die mittlere Schichtdicke betrug damit ca. 13 µm.

Zur Messung der Durchlässigkeit und Selektivität wurde die Membran druckdicht in eine Testkammer eingespannt. Eine grobporige Glassinterscheibe diente als Stütze. An der Zugangsseite wurde trockene ölfreie Luft mit einer Temperatur von 30 °C vorbeigeführt. An der Gegenseite wurde der Druck durch eine Vakuumpumpe erniedrigt. Unterhalb von 80 mbar begann der Durchfluß von Sauerstoff. Bei einem Sauerstoffpartialdruck von ca. 40 mbar betrug die Permeabilität, bezogen auf die freie Membranfläche ca. $3.10^{-6}$ $cm^3.cm/cm^2.s.cm$ Hg. Der Trennfaktor Sauerstoff/Stickstoff war größer als 1.000.

**Patentansprüche**

1. Membranen aus organischen Polymeren, die kristalline zum selektiven Transport niedermolekularer Substanzen befähigte Trägerverbindungen enthalten, wobei als Trägerverbindungen Verbindungen der Formel I

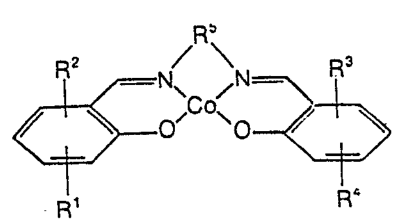

(I)

in der
$R^1$, $R^2$, $R^3$ und $R^4$ jeweils für ein Wasserstoffatom, eine Methylgruppe, eine Methoxygruppe, ein Fluoratom oder eine Trifluormethylgruppe stehen und $R^5$ den Rest $-CH_2CH_2-$ oder

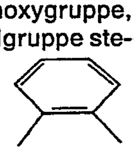

bedeutet oder Zeolithe, die man in einer Lösung des organischen Polymeren aus den Ausgangsstoffen erzeugt, verwendet werden.

2. Membranen nach Anspruch 1, dadurch gekennzeichnet, daß sie 2 bis 70 Vol.% Trägerverbindungen enthalten.

3. Membranen nach den Ansprüchen 1 oder 2, dadurch gekennzeichnet, daß man Polyethersulfone, Polysulfone, hydrierte Styrol/Butadien-Blockcopolymere oder Copolymere aus Ethylen/Acrylsäure oder Styrol-Maleinsäureanhydrid verwendet.

4. Membranen nach den Ansprüchen 1 bis 3, dadurch gekennzeichnet, daß sie auf mikroporösen Trägermembranen aufgebracht sind.

5. Verfahren zur Herstellung von Membranen nach den Ansprüchen 1 bis 4, dadurch gekennzeichnet, daß man eine, das Polymere und die zum selektiven Transport von niedermolekularen Substanzen befähigte Trägerverbindung enthaltende Lösung auf eine mikroporöse Trägermembran aufträgt und das Lösungsmittel verdampft unter Ausbildung einer Membran aus dem Polymeren, das die zum selektiven Transport von niedermolekularen Verbindungen befähigte Trägersubstanz in kristalliner Form enthält.

6. Verwendung von Membranen gemäß den Ansprüchen 1 bis 4 mit einem Gehalt an kristallinen Verbindungen der Formel I zum Abtrennen von molekularem Sauerstoff aus solchen enthaltenden Gasen.

7. Verwendung von Membranen gemäß den Ansprüchen 1 bis 4 mit einem Gehalt an Zeolithen zur Trennung von Kohlenwasserstoffen in geradkettige und verzweigte Anteile.

## Claims

1. A membrane made of an organic polymer, containing a crystalline carrier compound capable of selective transport of low molecular weight substances, wherein the carrier compound used is a compound of the formula I

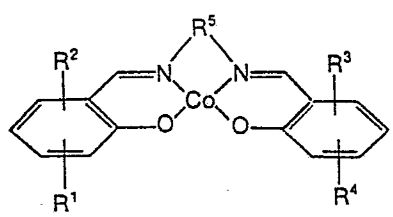

(I)

where $R^1$, $R^2$, $R^3$ and $R^4$ are each hydrogen, methyl, methoxy, fluorine or trifluoromethyl and $R^5$ is $-CH_2CH_2-$ or

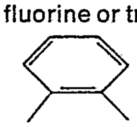

or a zeolite which is produced from the starting materials in a solution of the organic polymer.

2. A membrane as claimed in claim 1, which contains from 2 to 70% by volume of carrier compounds.

3. A membrane as claimed in either of claims 1 and 2, wherein a polyether-sulfone, polysulfone, hzydrogenated styrene/butadiene block copolymer or ethylene/acrylic acid or styrene/maleic anhydride copolymer is used.

4. A membrane as claimed in any of claims 1 to 3, which is applied onto a microporous carrier membrane.

5. A process for the preparation of a membrane as claimed in any of claims 1 to 4, wherein a solution containing the polymer and the carrier compound capable of selective transport of low molecular weight substances is applied onto a microporous carrier membrane and the solvent is evaporated to form a membrane of the polymer, which contains, in crystalline form, the carrier substance capable of selective transport of low molecular weight compounds.

6. Use of membrane as claimed in any of claims 1 to 4, containing a crystalline compound of the formula I, for removing molecular oxygen from gases containing same.

7. Use of a membrane as claimed in any of claims 1 to 4, containing a zeolite, for separating hydrocarbons into linear and branched portions.

## Revendications

1. Membranes en polymères organiques qui contiennent des composés de support cristallins susceptibles d'opérer un transport sélectif de substances à bas poids moléculaires, où l'on utilise, à titre de composés de support, des composés de la formule I

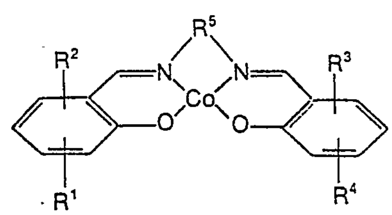

(I)

dans laquelle
$R^1$, $R^2$, $R^3$ et $R^4$ représentent chacun un atome d'hydrogène, un radical méthyle, un radical méthoxy, un atome de fluor ou un radical trifluorméthyle et $R^5$ représente le radical $-CH_2CH_2-$ ou

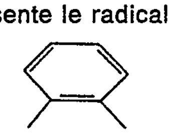

ou des zéolithes que l'on produit à partir des substances de départ dans une solution du polymère organique.

2. Membranes suivant la revendication 1, caractérisées en ce qu'elles contiennent de 2 à 70% en volume de composés de support.

3. Membranes suivant l'une des revendications 1 et 2, caractérisées en ce que l'on utilise des

polyéthersulfones, des polysulfones, des copolymères à blocs de styrène/butadiène hydratés, ou des copolymères d'éthylène et d'acide acrylique, ou de styrène-anhydride maléique.

4. Membranes suivant les revendications 1 à 3, caractérisées en ce qu'elles sont appliquées sur des membranes de support microporeuses.

5. Procédé de préparation de membranes suivant les revendications 1 à 4, caractérisé en ce que l'on applique le polymère et la solution contenant le composé de support susceptible d'assurer le transport sélectif de substances à bas poids moléculaires, sur une membrane de support microporeuse et on évapore le solvant, sous formation d'une membrane constituée du polymère, qui contient la substance de support susceptible d'assurer le transport sélectif de composés à bas poids moléculaires, sous forme cristalline.

6. Utilisation de membranes suivant les revendications 1 à 4, avec une teneur en composés cristallins de la formule I en vue de la séparation d'oxygène moléculaire de gaz qui en contiennent.

7. Utilisation de membranes suivant les revendications 1 à 4, avec une teneur en zéolithes en vue de la séparation d'hydrocarbures en fractions linéaires et ramifiées.